# EUROPÄISCHE PATENTSCHRIFT

(11) **EP 3 534 173 B1**
(45) Veröffentlichungstag und Bekanntmachung des Hinweises auf die Patenterteilung: **02.08.2023**
(21) Anmeldenummer: 18159042.3
(22) Anmeldetag: 28.02.2018
(51) Int. Cl.: G01S 7/02

(54) **GEHÄUSEANORDNUNG FÜR EINEN RADARSENSOR**
HOUSING UNIT FOR A RADAR SENSOR
AGENCEMENT DE BOÎTIER POUR UN CAPTEUR RADAR

(43) Veröffentlichungstag der Anmeldung: 04.09.2019
(73) Patentinhaber: Baumer Electric AG, 8500 Frauenfeld (CH)
(72) Erfinder: Mauch, Rainer, 78247 Hilzingen (DE); Weigel, Michael, 8555 Müllheim (CH); Visscher, Egbert, 9434 Au (CH)
(74) Vertreter: Strauss, Steffen

(56) Entgegenhaltungen:
- EP-A1- 3 107 151
- EP-A2- 3 171 197
- DE-A1-102011 122 346
- DE-A1-102014 109 105
- DE-A1-102017 112 187
- DE-B3- 10 316 535

## Beschreibung

Die Erfindung betrifft eine Gehäuseanordnung für einen Radarsensor sowie einen Radarsensor.

Eine bekannte Gehäuseanordnung für einen Radarsensor umfasst einen rohrförmigen Körper, wobei an einem distalen Ende des rohrförmigen Körpers eine Linse anbringbar oder angebracht ist. Der rohrförmige Körper dient dazu, die Linse in einer genau definierten Brennweite zum Radarsender und Radarempfänger zu fixieren.

Solche Radarsensoren werden in verschiedenen Bereichen umgesetzt, beispielsweise um Füllstände in Behältern zu messen oder Abstände von Maschinenteilen zueinander zu vermessen. Auch für Distanzmessungen von Fahrzeugen zur Kollisionsvermeidung untereinander oder zur Messung eines Abstandes zum Boden oder zu Pflanzen bei landwirtschaftlichen Anwendungen werden solche Sensoren verwendet.

Die EP 31 711 97 A2 zeigt eine Gehäuseanordnung für einen Radarsensor. Das Gehäuse weist eine umlaufende Gehäusewandung auf, welche eine Gehäuseöffnung begrenzt. Ferner ist eine einteilige Verschlusskappe zum Verschließen des Gehäuses vorgesehen, wobei die einteilige Verschlusskappe eine umlaufende Kappenwandlung und eine Hochfrequenzlinse aufweist und wobei die Hochfrequenzlinse die umlaufende Kappenwanderung stirnseitig abschließt und zu der Gehäuseöffnung hin ausgerichtet ist. Gegenstand der vorliegenden Druckschrift ist eine Anordnung der Hochfrequenzlinse in Bezug zu dem Gehäuse. Die DE 10 2011 122 346 A1 zeigt eine Radareinrichtung für ein Kraftfahrzeug, welche wenigstens ein Absorptionselement aufweist, welches aus einem Absorptionsmaterial gebildet ist und welches die elektromagnetischen Wellen absorbiert. Die EP 31 071 51 A1 zeigt eine Radarhalterung für ein Fahrzeug. Eine Seitenwand, welche ein Radarmodul umgibt, ist aus einem nicht leitenden Material ausgeführt, wobei ein Teil einer Rückseite der Seitenwand mit einem Radar absorbierenden Material bedeckt ist. Die DE 10 2014 109 105 A1 zeigt eine Radarsensorvorrichtung für ein Kraftfahrzeug mit einer Abschirmeinrichtung, welche aus einem elektromagnetische Wellen absorbierendem Material gebildet ist. Die DE 103 16 535 B3 zeigt eine Anordnung zum verdeckten Einbau von Radarsensoren für elektronische Park-, Abstands- und Kollisionswarnhilfen in Kraftfahrzeugen.

Die DE 10 2017 112 187 A1 zeigt eine Leuchte, die einen Funkwellensensor zum Erkennen eines Objekts aufweist. Ferner sind noch die DE 103 16 535 B3 und die DE 10 2017 112 187 A1 bekannt, wobei die letztgenannte eine Gehäuseanordnung in Form eines rechteckigen Parallelepipeds offenbart.

Aufgabe der Erfindung ist es, eine Lösung bereitzustellen, mit der die Messung verbessert werden kann.

Erfindungsgemäß wird dies dadurch gelöst, dass die Gehäuseanordnung eine an einer Seitenwand des rohrförmigen Körpers angeordnete Abschirmeinrichtung für Radarstrahlen aufweist.

Ein erfindungsgemäßer Radarsensor umfasst eine erfindungsgemäße Gehäuseanordnung und einen Radarsender und/oder einen Radarempfänger.

Durch die erfindungsgemäße Lösung wird verhindert, dass Radarstrahlen seitlich austreten oder seitlich eintreten. Störsignale durch in einem seitlichen Bereich liegende Objekt werden daher minimiert oder ganz verhindert.

Die erfindungsgemäße Lösung kann mit den folgenden, jeweils für sich vorteilhaften und beliebig miteinander kombinierbaren Ausgestaltungen und Weiterentwicklungen weiter verbessert werden. Die genannten Lösungen können insbesondere auch unabhängig von der oben genannten Lösung sein.

Der rohrförmige Körper kann insbesondere hohlzylindrisch ausgestaltet sein. Eine solche Ausgestaltung kann besonders einfach herzustellen sein. Erfindungsgemäß ist der rohrförmige Körper kreiszylindrisch ausgestaltet. Eine solche Ausgestaltung kann einfach herzustellen sein und gute Messeigenschaften aufweisen. Die Abschirmeinrichtung kann sich nur an einigen Teilen des rohrförmigen Körpers befinden. Beispielsweise können selektiv nur Teile eine Abschirmeinrichtung aufweisen, hinter denen sich im Betrieb bewegliche Teile befinden.

Um eine besonders gute Abschirmung zu verschiedenen Richtungen hin zu erreichen, kann die Abschirmeinrichtung um eine Abstrahlachse und/oder um eine Symmetrieachse herum ringförmig geschlossen sein.

In einer vorteilhaften Ausgestaltung kann sich die Abschirmeinrichtung von dem distalen Ende zu einem proximalen Ende erstrecken. Dadurch ist eine besonders gute Abschirmung entlang einer Messrichtung möglich. Das proximale Ende kann dem distalen Ende gegenüber liegen. Am proximalen Ende können zum Beispielsind erfindungsgemäß im Inneren der Gehäuseanordnung ein Radarsender und/oder ein Radarempfänger angeordnet.

Der rohrförmige Körper kann einteilig mit der Linse sein, um eine einfache Herstellung zu ermöglichen. In einer anderen Ausgestaltung kann die Linse an dem Körper angebracht werden, beispielsweise durch Ankleben, Schrauben, Klemmen oder Anklippen.

Die Abschirmeinrichtung umfasst erfindungsgemäß eine auf dem rohrförmigen Körper aufgebrachte Schicht. Eine solche Ausgestaltung kann besonders leicht sein. Die Schicht kann beispielsweise durch Aufdampfen, Aufsprühen, Eintauchen, galvanisches Aufbringen oder ähnliche Auftragsverfahren aufgebracht werden.

Alternativ umfasst die Abschirmeinrichtung erfindungsgemäß eine Folie. Eine solche Ausgestaltung kann besonders einfach herzustellen sein. Beispielsweise kann eine abschirmende Folie angeklebt werden. Die Folie kann Teil eines Tapes oder Klebebands sein, um eine einfache Anbringung zu ermöglichen.

Alternativ umfasst die Abschirmeinrichtung erfindungsgemäß ein von dem rohrförmigen Körper separates Teil. Beispielsweise kann ein abschirmendes ringförmiges Element auf oder in den rohrförmigen Körper gebracht werden. Ein solches Element kann etwa von vorn auf oder in den rohrförmigen Körper geschoben werden. Bei einer solchen Ausgestaltung kann die Abschirmeinrichtung austauschbar sein, so dass zum Beispiel je nach Anwendung eine andere, jeweils angepasste Abschirmeinrichtung verwendet werden kann.

Die Abschirmeinrichtung ist erfindungsgemäß an einer Außenseite des rohrförmigen Körpers angeordnet. Dadurch können insbesondere störende Reflexe verringert werden, die zum Beispiel auftreten können, wenn die Abschirmeinrichtung an einer Innenseite des rohrförmigen Körpers und damit in der Nähe eines Radarsenders und/oder eines Radarempfängers angeordnet ist.

Befindet sich die Abschirmeinrichtung an einer Außenseite des rohrförmigen Körpers, so ist es vorteilhaft, wenn eine Wandstärke der Seitenwand des rohrförmigen Körpers im Bereich der Abschirmeinrichtung zur zumindest teilweisen gegenseitigen Abschwächung oder Auslöschung zweier Radarwellen, die an der Vorderseite und der Rückseite der Seitenwand reflektiert werden, ausgestaltet ist. Dies ist etwa der Fall, wenn der Wegunterschied der beiden reflektierten Wellen Lambda/2, also eine halbe Wellenlänge, beträgt. Die Rückseite ist hierbei die Seite, an der die Abschirmeinrichtung angeordnet ist. Die Welle wird an der Vorderseite zumindest teilweise und an der Rückseite mit der Abschirmung zu fast 100 Prozent reflektiert. Bei der Überlagerung der beiden reflektierten Wellen sind die beiden zueinander phasenverschoben und es tritt eine zumindest teilweise Auslöschung auf. Dadurch ist ein Störsignal verringert. Eine Anpassung der Phasendifferenz kann zum Beispiel durch eine Anpassung der Materialdicke im Bereich der Abschirmung erfolgen. Dabei ist auch der Winkel, unter dem die Wellen auftreffen, zu beachten. Die Dicke der Seitenwand kann in Abhängigkeit von einem Abstand zum Radarsender verschieden sein. Beispielsweise kann sie in der Nähe des Radarsenders dicker sein, da die Radarstrahlung hier unter einem steileren Winkel auf die Seitenwand trifft. In weiter entfernten Bereichen kann die Wanddicke kleiner sein, da der Auftreffwinkel hier flacher ist.

Ist die Abschirmeinrichtung außen angeordnet, so kann die Abschirmeinrichtung nach außen hin von einer Schutzvorrichtung abgedeckt sein, um sie vor mechanischen Beschädigungen zu schützen.

Das Material der Abschirmungseinrichtung umfasst ein Material, das zumindest teilweise reflektiert. Beispielsweise kann das Material der Abschirmeinrichtung Metall umfassen. In einer weiteren bevorzugten Ausführungsform kann die Abschirmeinrichtung aus einem die Radarstrahlung absorbierenden Material ausgeführt sein, wie beispielsweise Metallpartikel, Nanotubes oder Leitruß. Ebenfalls kann die Größe der Metallpartikel oder der Nanotubes auf die Wellenlänge der Radarstrahlung angepasst sein, um eine gute Absorption zu erreichen.

Im Folgenden wird die Erfindung anhand vorteilhafter Ausgestaltungen mit Bezug auf die Zeichnungen beispielhaft näher erläutert. Die dabei dargestellten vorteilhaften Weiterentwicklungen und Ausgestaltungen sind jeweils voneinander unabhängig und können beliebig miteinander kombiniert werden, je nachdem, wie dies im Anwendungsfall notwendig ist.

Es zeigen:
- Fig. 1: eine schematische Querschnittsansicht einer ersten Ausführungsform einer Gehäuseanordnung eines Teilbereichs für einen Radarsensor;
- Fig. 2: ein Diagramm eines Signals in einer ersten Ebene mit und ohne Abschirmeinrichtung;
- Fig. 3: ein Diagramm des Signals in einer zweiten Ebene mit und ohne Abschirmeinrichtung;
- Fig. 4: eine schematische Querschnittsansicht einer zweiten Ausführungsform;
- Fig. 5: eine schematische Querschnittsansicht einer dritten Ausführungsform;
- Fig. 6: eine schematische Querschnittsansicht einer vierten Ausführungsform;
- Fig. 7: eine schematische Querschnittsansicht einer fünften Ausführungsform und
- Fig. 8: eine schematische Querschnittsansicht einer Ausführungsform einer Gehäuseanordnung eines zylinderförmigen Radarsensors.

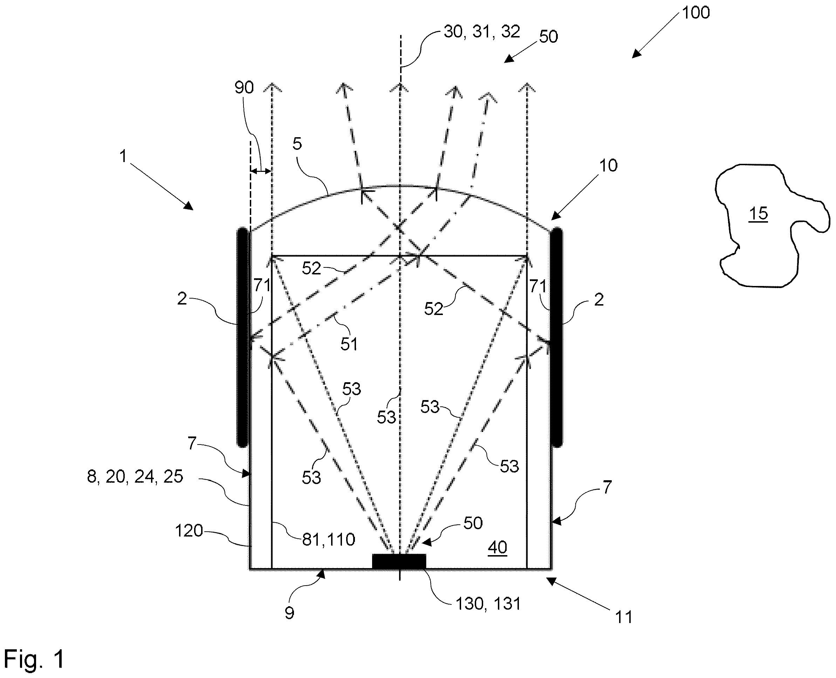

In Fig. 1 ist ein Radarsensor 100 mit einer ersten Ausgestaltung einer Gehäuseanordnung 1 gezeigt. Die Gehäuseanordnung 1 umfasst einen rohrförmigen Körper 8, der sich von einem proximalen Ende 11 zu einem distalen Ende 10 erstreckt.

Der rohrförmige Körper 8 ist als ein Zylinder 20, speziell im Rahmen der vorliegenden Erfindung als ein Kreiszylinder 25 ausgestaltet. Insbesondere handelt es sich um einen Hohlzylinder 24, der einen Innenraum 40 aufweist.

Am proximalen Ende 11 sind in dem Innenraum 40 an einer Rückwand 9 ein Radarsensor 130 und ein Radarempfänger 131 angeordnet. Diese dienen dazu, Radarstrahlung 50 auszusenden, bzw. die von den zu messenden Objekten (nicht gezeigt) zurückgeworfene Radarstrahlung 50 zu empfangen. Das zurückgeworfene Signal kann dann ausgewertet werden und so zum Beispiel die Geschwindigkeit oder die Entfernung eines Objekts ermittelt werden. Die Abstrahlung erfolgt um eine Abstrahlachse 30 herum etwa symmetrisch. Die Abstrahlachse 30 bildet eine Meßachse 32. Die einzelnen Radarstrahlen breiten sich dabei entlang individueller Ausbreitungsrichtungen 53 aus.

Die Abstrahlachse 30 entspricht zugleich etwa der Symmetrieachse 31 der Gehäuseanordnung 1.

Um die Radarstrahlung 50 zu bündeln, ist an dem distalen Ende 10 eine Linse 5 angeordnet. In dem gezeigten Beispiel ist die Linse 5 einteilig mit dem rohrförmigen Körper 8. Beides kann zum Beispiel aus einem dielektrischen Kunststoff durch Spritzgießen hergestellt sein.

Neben dem Radarsensor 100 ist ein störendes Objekt 15 vorhanden, das aufgrund von seitlich austretenden Radarwellen bei bisherigen Systemen Störungen verursachen würde, insbesondere wenn sich das Objekt 15 bewegt. Die dadurch erzeugten Signale lassen sich messtechnisch oder softwaretechnisch nur schlecht vom Nutzsignal trennen.

Die gezeigte erfindungsgemäße Ausführungsform verfügt an einer Seitenwand 7 des rohrförmigen Körpers 8 über eine Abschirmeinrichtung 2. Diese schirmt die Radarstrahlung 50 so ab, dass sie nicht auf das Objekt 15 treffen kann. Die Radarstrahlung 50 wird von der Abschirmeinrichtung 2 reflektiert und nach innen zurückgeworfen und dann weiter nach vorne abgestrahlt werden.

Die Abschirmeinrichtung 2 kann erfindungsgemäß eine Schicht 21 sein, die auf der Seitenwand 7 aufgebracht wurde, beispielsweise durch Aufdampfen, Aufträgen oder ähnliche Verfahren. Die Abschirmeinrichtung 2 kann erfindungsgemäß auch eine Folie 22 sein, die zum Beispiel als Teil eines Klebebandes aufgeklebt wurde. In einer weiteren erfindungsgemäßen Ausgestaltung kann die Abschirmeinrichtung 2 ein separates, zwingend leitendes (Metall) Teil 23 sein, das auf die Gehäuseanordnung 1 aufgeschoben wurde.

Vorteilhafterweise erstreckt sich die Abschirmeinrichtung 2 um die Abstrahlachse 30 und/oder um die Symmetrieachse 31 herum ringförmig geschlossen, sodass sie eine gute Schutzwirkung erzielen kann. Die gezeigte Abschirmeinrichtung 2 ist etwa zylinderförmig.

Bei der Ausgestaltung der Fig. 1 befindet sich die Abschirmeinrichtung 2 an einer Außenseite 80 des rohrförmigen Körpers 8. Gleichzeitig ist die Wandstärke 90 in einem Bereich 71, an dem die Abschirmeinrichtung 2 angeordnet ist, so angepasst, dass bei einer Reflexion an einer Vorderseite 110 der Seitenwand 7 und einer Rückseite 120 der Seitenwand 7 eine zumindest teilweise Auslöschung der Radarstrahlung 50 erfolgt. Eine erste reflektierte Welle 51, die an der Vorderseite 110, die gleichzeitig die Innenseite 81 der Seitenwand 7 ist, reflektiert wurde, und eine zweite reflektierte Welle 52, die an der Rückseite 130 reflektiert wurde, weisen einen Phasenunterschied von etwa einer halben Wellenlänge auf, sodass sie sich in einiger Entfernung zumindest teilweise destruktiv überlagern. Die dafür notwendige Wandstärke 90 hängt unter anderem von dem Brechungsindex des Materials der Seitenwand 7 und dem Winkel, unter dem die Radarstrahlung 50 in dem Bereich 71 auftritt, ab. In einem vorderen Bereich, der am distalen Ende 10 liegt, kann die Wandstärke 90 aufgrund des flacheren Winkels, mit dem die Radarstrahlung 50 auftrifft, dünner sein als in einem hinteren Bereich, der am proximalen Ende 11 liegt.

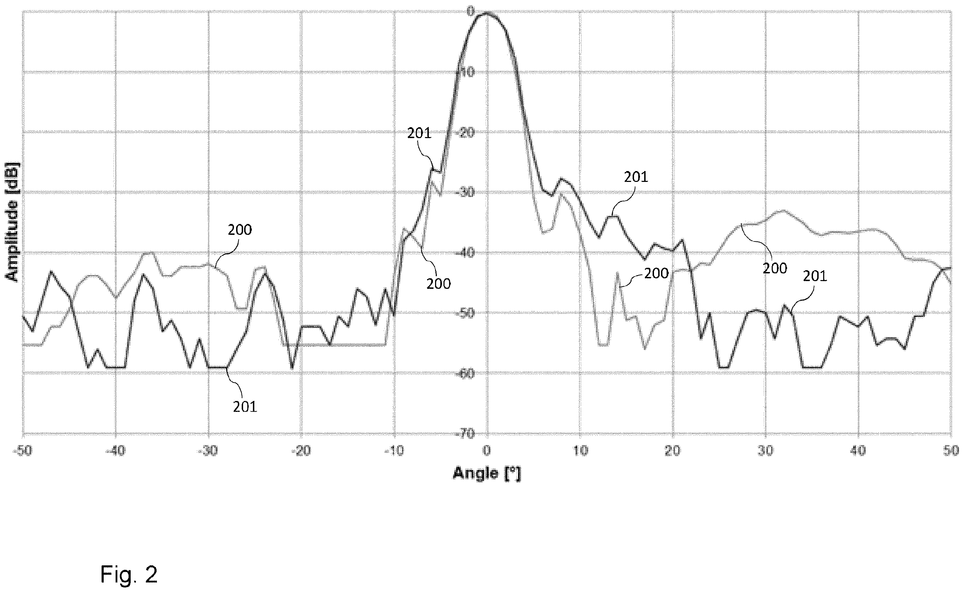

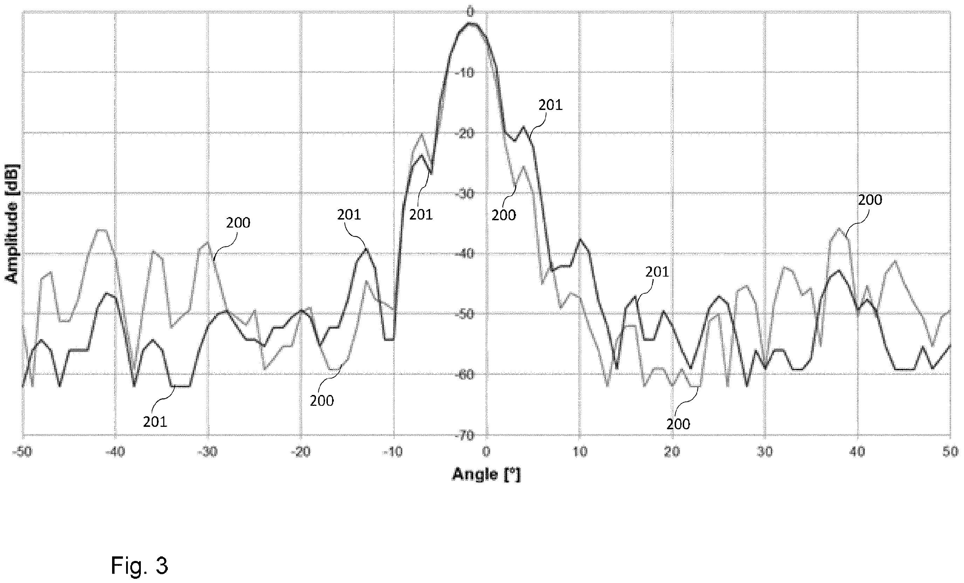

In den Figuren 2 und 3 sind zwei Diagramme gezeigt, die einen Vergleich zwischen einer Messung ohne und mit einer Abschirmeinrichtung 2 zeigen. Bei einer Messung mit der Abschirmeinrichtung 2 sind die Signale 201 besser als die Signale 200 einer Messung ohne Abschirmeinrichtung 2. Die Unterschiede zwischen den Figuren 2 und 3 sind dadurch begründet, dass der Radarsender 130 und der Radarempfänger 131 leicht asymmetrisch in der Gehäuseanordnung 1 angeordnet sind.

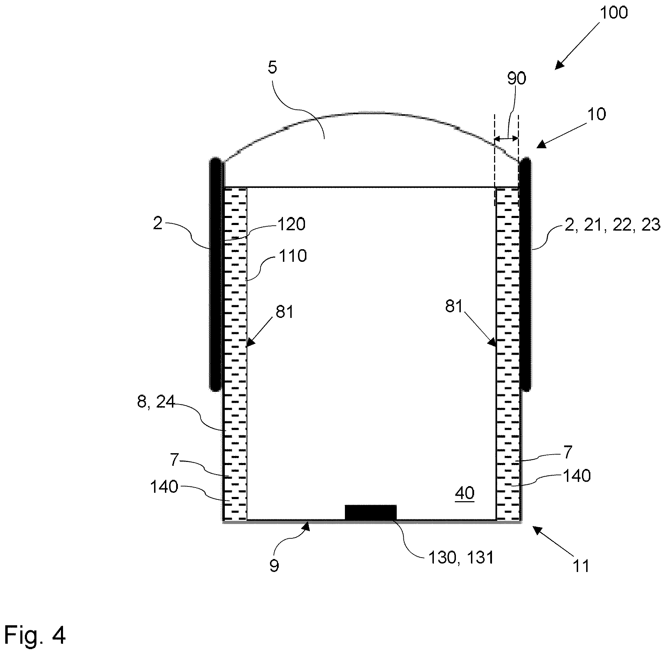

In der Fig. 4 ist eine weitere Ausgestaltung gezeigt. Bei diesem Radarsensor 100 ist die Linse 5 nicht einteilig mit der Gehäuseanordnung 1. Sie ist an der Gehäuseanordnung 1 am distalen Ende 10 angebracht. Die Gehäuseanordnung 1 ist in diesem Ausführungsbeispiel aus einem Material gefertigt, das leitende Partikel 140, etwa Metallpartikel, Nanotubes oder Ruß enthält. Eine solche Ausgestaltung absorbiert die Radarstrahlung 50 zusätzlich, sodass weniger Radarstrahlung 50 seitlich austreten kann oder zurück in den Innenraum 40 gelangt.

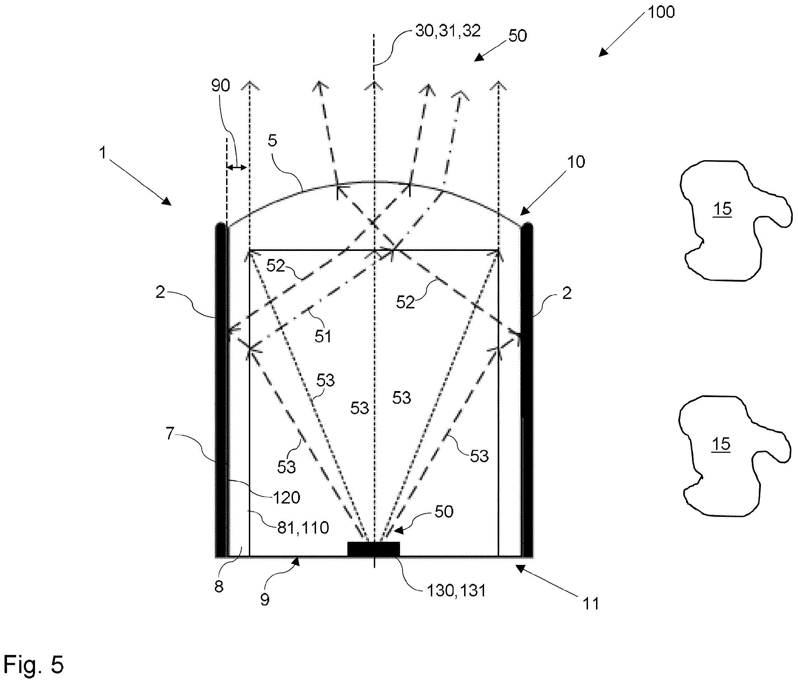

In Fig. 5 ist eine weitere Ausgestaltung einer Gehäuseanordnung 1 gezeigt, die der Ausgestaltung der Fig. 1 ähnlich ist. Allerdings erstreckt sich die Abschirmeinrichtung 2 entlang der Achse 32 komplett vom distalen Ende 10 zum proximalen Ende 11. Dadurch ist eine noch bessere Abschirmung möglich.

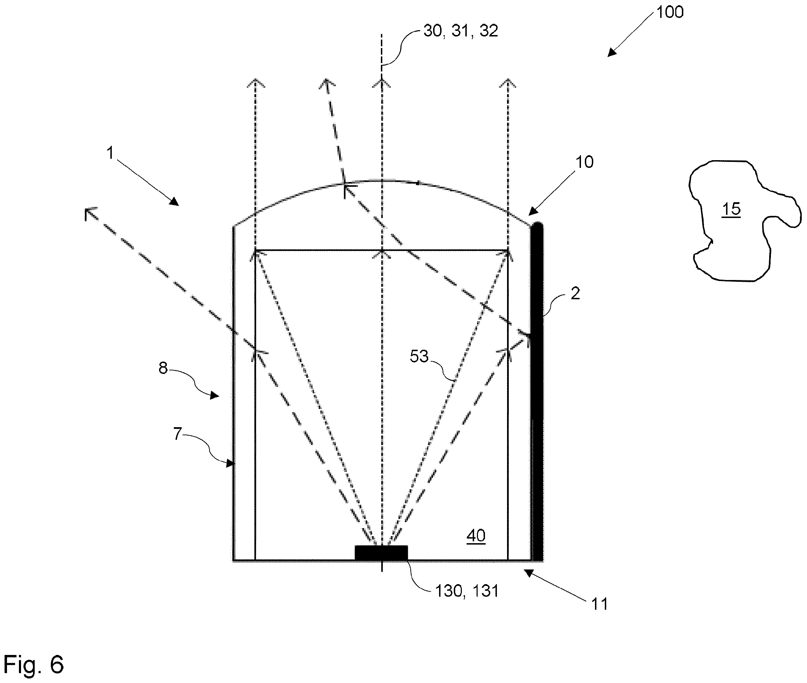

In Fig. 6 ist eine weitere Ausgestaltung gezeigt, bei der sich die Abschirmeinrichtung 2 zwar vom distalen Ende 10 bis zum proximalen Ende 11 erstreckt, allerdings nicht ringförmig um die Längsachse 32 herum geschlossen ist, sondern nur einen Teilbereich dieses Umfangs abdeckt. Dies kann für manche Anwendungen ausreichend sein und insbesondere ein geringeres Gewicht aufweisen als eine komplett geschlossene Ausgestaltung.

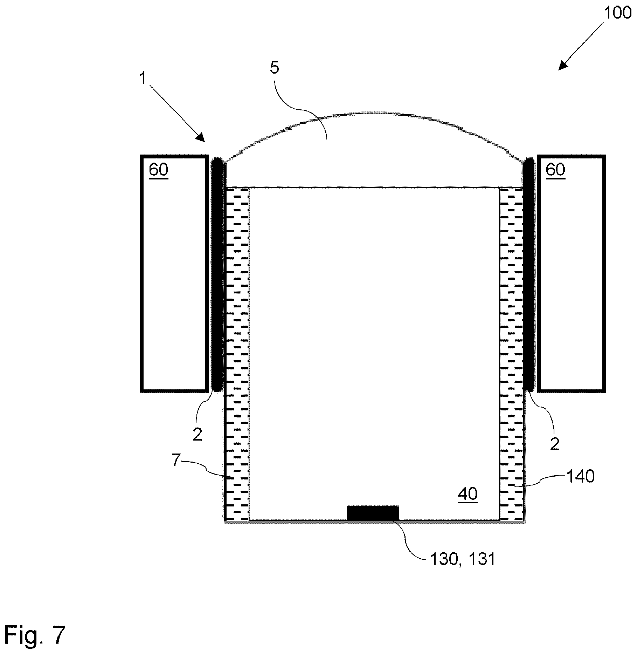

In Fig. 7 ist eine weitere Ausgestaltung gezeigt. Bei dieser Ausgestaltung weist die Gehäuseanordnung 1 wieder leitende Partikel 140 auf. Ferner verfügt der Radarsensor 100 außen um die Abschirmeinrichtung 2 herum über eine Schutzrichtung 60, die die Abschirmeinrichtung 2 vor mechanischen Beschädigungen schützt. Beispielsweise kann es sich um einen Ring handeln, der über die Abschirmeinrichtung 2 geschoben wird.

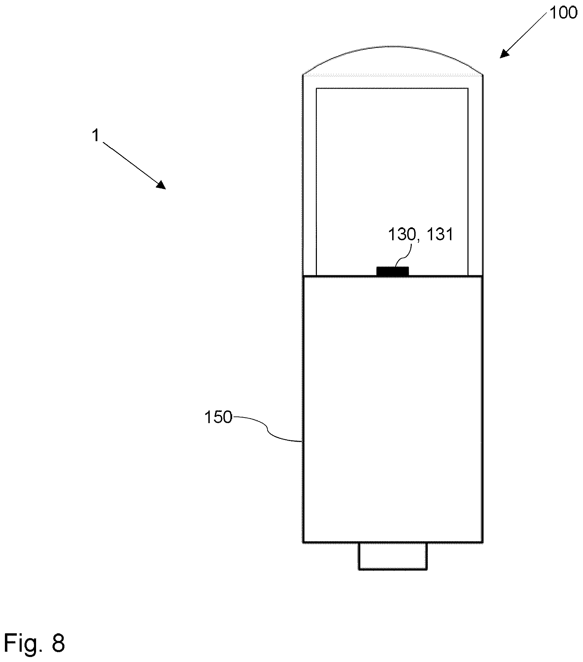

In Fig. 8 ist eine Ausführungsform einer gesamten Gehäuseanordnung eines zylinderförmigen Radarsensors gezeigt. Bei dieser Ausführungsform umfasst die Gehäuseanordnung 1 ein zylindrisches Gehäuse 150 auf, in welchem zumindest eine Leiterplatte mit dem Radarsender 130 und dem Radarempfänger 131 und zumindest ein Stecker angeordnet sind und an welchem der Radarsensor 100 befestigt wird. Das Gehäuse 150 ist erfindungsgemäß aus Kunststoff hergestellt. Das Gehäuse 150 ermöglicht einen Einbau der Gehäuseanordnung 1 in runden Bohrungen.

## Patentansprüche

1. Gehäuseanordnung (1) für einen Radarsensor (100), umfassend wenigstens einen rohrförmigen Körper (8), wobei an einem distalen Ende (10) des rohrförmigen Körpers (8) eine Linse (5) angebracht ist, wobei an einem proximalen Ende (11) ein Radarsender (130) und ein Radarempfänger (131) in dem rohrförmigen Körper (8) angeordnet sind, wobei die Gehäuseanordnung (1) eine an einer Seitenwand (7) des rohrförmigen Körpers (8) angeordnete Abschirmeinrichtung (2) für Radarstrahlen aufweist, wobei der rohrförmige Körper (8) aus einem dielektrischen Kunststoff besteht und die Abschirmeinrichtung (2) an einer Außenseite (80) des rohrförmigen Körpers (8) angeordnet ist und eine auf dem rohrförmigen Körper (8) aufgebrachte Schicht (21) oder eine Folie oder ein von dem rohrförmigen Körper (7) separates Metallteil (23) umfasst, **dadurch gekennzeichnet, dass** der rohrförmige Körper (8) als ein Kreiszylinder ausgebildet ist.

2. Gehäuseanordnung (1) nach Anspruch 1, wobei der rohrförmige Körper (8) hohlzylindrisch ausgestaltet ist.

3. Gehäuseanordnung (1) nach einem der vorhergehenden Ansprüche, wobei die Abschirmeinrichtung (2) um eine Abstrahlachse (30) und/oder um eine Symmetrieachse (31) herum ringförmig geschlossen ist.

4. Gehäuseanordnung (1) nach einem der vorhergehenden Ansprüche, wobei sich die Abschirmeinrichtung (2) von dem distalen Ende (10) zu einem proximalen Ende (11) erstreckt.

5. Gehäuseanordnung (1) nach einem der vorhergehenden Ansprüche, wobei eine Wandstärke (90) der Seitenwand (7) des rohrförmigen Körpers (8) in einem Bereich (71) der Abschirmeinrichtung (2) zur zumindest teilweisen gegenseitigen Abschwächung oder Auslöschung zweier Radarwellen (51, 52), die an der Vorderseite (120) und der Rückseite (121) der Seitenwand reflektiert (7) werden, ausgestaltet ist.

6. Gehäuseanordnung (1) nach einem der vorhergehenden Ansprüche, wobei der rohrförmige Körper (8) zumindest abschnittsweise ein Material umfasst, das die Radarstrahlung (50) absorbiert.

7. Gehäuseanordnung (1) nach einem der vorhergehenden Ansprüche, wobei der rohrförmige Körper (8) zumindest abschnittsweise ein Material umfasst, das leitende Partikel (140) enthält.

8. Gehäuseanordnung (1) nach einem der vorhergehenden Ansprüche, wobei die Abschirmeinrichtung (2) nach außen hin von einer Schutzvorrichtung (60) abgedeckt ist.

9. Radarsensor (100), umfassend eine Gehäuseanordnung (1) nach einem der Ansprüche 1 bis 8.

## Claims

1. Housing arrangement (1) for a radar sensor (100), comprising at least one tubular body (8), a lens (5) being attached to a distal end (10) of the tubular body (8), a radar sender (130) and a radar receiver being arranged in the tubular body (8) at a proximal end (11), with the housing arrangement (1) having a shielding device (2) for radar beams arranged on a side wall (7) of the tubular body (8), the tubular body consisting of a dielectric plastics material and the shielding device (2) being arranged on an external face (80) of the tubular body (8) and having a layer (21) applied to the tubular body (8) or a film or a metal part (23) separate from the tubular body (7), **characterized in that** the tubular body (8) is a circular cylinder.

2. Housing arrangement (1) according to claim 1, wherein the tubular body (8) is a hollow cylinder.

3. Housing arrangement (1) according to any one of the preceding claims, wherein the shielding device (2) is closed around a beam axis (30) and/or around an axis of symmetry (31) in an annular manner.

4. Housing arrangement (1) according to any one of the preceding claims, wherein the shielding device (2) extends from the distal end (10) to a proximal end (11).

5. Housing arrangement (1) according to any one of the preceding claims, wherein a wall reinforcement (90) of the side wall (7) of the tubular body (8) is formed in a region (71) of the shielding device (2) for the at least partially mutual mitigation or elimination of two radar waves (51, 52) that are reflected on the front face (120) and rear face (121) of the side wall.

6. Housing arrangement (1) according to any one of the preceding claims, wherein the tubular body (8) comprises, at least in sections, a material that absorbs the radar radiation (50).

7. Housing arrangement (1) according to any one of the preceding claims, wherein the tubular body (8) comprises, at least in sections, a material that contains conductive particles (140).

8. Housing arrangement (1) according to any one of the preceding claims, wherein the shielding device (2) is covered toward the outside by a protective system (60).

9. Radar sensor (100), comprising a housing arrangement (1) according to any one of claims 1 to 8.

## Revendications

1. Agencement de boîtier (1) pour un détecteur radar (100), comprenant au moins un corps tubulaire (8), une lentille (5) étant montée à une extrémité distale (10) du corps tubulaire (8), un émetteur radar (130) et un récepteur radar (131) étant disposés à une extrémité proximale (11) dans le corps tubulaire (8), l'agencement de boîtier (1) présentant un dispositif de blindage (2) pour les rayons radar disposé sur une paroi latérale (7) du corps tubulaire (8), le corps tubulaire (8) étant constitué d'une matière plastique diélectrique et le dispositif de blindage (2) étant disposé sur un côté extérieur (80) du corps tubulaire (8) et comprenant une couche (21) appliquée sur le corps tubulaire (8) ou une feuille ou une pièce métallique (23) séparée du corps tubulaire (7), **caractérisé en ce que** le corps tubulaire (8) se présente sous la forme d'un cylindre circulaire.

2. Agencement de boîtier (1) selon la revendication 1, le corps tubulaire (8) étant conçu en forme de cylindre creux.

3. Agencement de boîtier (1) selon l'une des revendications précédentes, le dispositif de blindage (2) étant fermé de manière annulaire autour d'un axe de rayonnement (30) et/ou d'un axe de symétrie (31).

4. Agencement de boîtier (1) selon l'une des revendications précédentes, le dispositif de blindage (2) s'étendant de l'extrémité distale (10) à une extrémité proximale (11).

5. Agencement de boîtier (1) selon l'une des revendications précédentes, une épaisseur de paroi (90) de la paroi latérale (7) du corps tubulaire (8) est conçue dans une zone (71) du dispositif de blindage (2) pour atténuer ou supprimer au moins partiellement l'une par rapport à l'autre deux ondes radar (51, 52) qui sont réfléchies (7) sur la face avant (120) et la face arrière (121) de la paroi latérale.

6. Agencement de boîtier (1) selon l'une des revendications précédentes, le corps tubulaire (8) comprenant au moins par sections un matériau absorbant le rayonnement radar (50).

7. Agencement de boîtier (1) selon l'une des revendications précédentes, le corps tubulaire (8) comprenant au moins par sections un matériau contenant des particules conductrices (140).

8. Agencement de boîtier (1) selon l'une des revendications précédentes, le dispositif de blindage (2) étant recouvert vers l'extérieur par un dispositif de protection (60).

9. Détecteur radar (100), comprenant un agencement de boîtier (1) selon l'une des revendications 1 à 8.
